# EUROPEAN PATENT APPLICATION

(11) **EP 4 707 027 A1**
(43) Date of publication of application: **11.03.2026**
(21) Application number: 25157397.8
(22) Date of filing: 12.02.2025
(51) Int. Cl.: B60K 37/20, B60Q 1/14, B62D 1/18, B62D 1/181, B62D 1/183, B62D 1/185, B62D 1/187

(54) **COCKPIT FOR VEHICLE**

(30) Priority: 09.09.2024 KR 20240122551
(71) Applicant: Hyundai Mobis Co., Ltd., Gangnam-gu Seoul 06141 (KR)
(72) Inventor: KIM, Seung Cheol, 16891 Yongin-si (KR)
(74) Representative: Vossius & Partner Patentanwälte Rechtsanwälte mbB

(57) **Abstract**

A cockpit for a vehicle, includes: a steering device including a shroud to cover a steering column, and a multifunctional lever protruding and extending outward from the shroud; a frame to which the steering device is connected to perform a telescopic operation; a dashboard having an opening through which the steering device passes; and a door device to selectively block a space between an edge of the opening and the shroud. In response to the steering device being positioned at a normal position, the door device blocks the space, and in response to the steering device moving to an accommodation position toward the dashboard, the door device opens the space and prevents interference with the multifunctional lever.

## Description

### CROSS-REFERENCE TO RELATED APPLICATION(S)

The present application claims priority and the benefit of Korean Patent Application No. 10-2024-0122551, filed on September 9, 2024, in the Korean Intellectual Property Office, the entire disclosure of which is incorporated herein by reference in its entirety for all purposes.

### BACKGROUND

### 1. Field

The present invention relates to a cockpit for a vehicle.

### 2. Description of the Related Art

Currently, most vehicles are equipped with columns for connecting steering wheels and steering parts to steer the vehicles, and multifunctional levers for manipulating the vehicles. As autonomous vehicles have attracted attention recently, a technology for hiding the steering wheel has been studied to ensure an interior space, improve openness, and improve sense of luxury when the vehicle is in a fully autonomous driving mode.

In order to hide the steering wheel, it is possible to use a method of performing a long-tele-in operation on the column and rotating and hiding the steering wheel. However, it is difficult to hide the steering wheel because components, such as a multifunctional lever and a shroud disposed in the related art, interfere with a dashboard. Therefore, it is necessary to cope with this difficulty.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

The present disclosure seeks to provide solutions to solve the above-mentioned problems and aims to provide a cockpit for a vehicle, the cockpit being capable of telescopically operating a steering unit by implementing a method of avoiding components.

Technical problems of the present invention are not limited to the aforementioned technical problems, and other technical problems, which are not mentioned above, may be clearly understood by those skilled in the art from the following descriptions.

In a general aspect of the disclosure, a cockpit for a vehicle, includes: a steering device including a shroud configured to cover a steering column, and a multifunctional lever protruding and extending outward from the shroud; a frame to which the steering device is connected to perform a telescopic operation; a dashboard having an opening through which the steering device passes; and a door device configured to selectively block a space between an edge of the opening and the shroud, wherein, in response to the steering device being positioned at a normal position, the door device is configured to block the space, and wherein, in response to the steering device moving to an accommodation position toward the dashboard, the door device is further configured to open the space and prevent interference with the multifunctional lever.

The door device may include a rail box fixed to the frame and having a first guide hole and a second guide hole, a door with one end rotatably connected to the rail box, a door link configured to rotate the door while moving along the first guide hole, a door bridge configured to move the door link while moving along the second guide hole, and an elastic member configured to apply an elastic force to move the door bridge.

The rail box may include an upper surface and a lower surface provided to face each other, and a lateral surface configured to connect the upper surface and the lower surface, wherein the first guide hole may be formed in each of the upper surface and the lower surface, and the second guide hole may be formed in the lateral surface.

The cockpit may further include guide protrusions provided at one side of the door link and connected to the first guide hole of the upper surface and the first guide hole of the lower surface, wherein another side of the door link may be rotatably connected to the door.

The door bridge may be disposed to penetrate the second guide hole, wherein one side of the door bridge may be rotatably connected to one side of the door link inside the lateral surface, and wherein the other side of the door bridge may be connected to the elastic member outside the lateral surface.

The shroud may include a connection part extending toward the rail box and connected to the door bridge, wherein the connection part may be configured to move the door bridge in response to the steering device moving from the accommodation position to the normal position.

The cockpit may further include a connection plate having a connection groove connected to the door bridge, and a connection protrusion connected to the second guide hole, wherein the connection plate and the connection protrusion may be provided at an end of the connection part, wherein the connection protrusion may protrude from the end in an extension direction of the connection part, and wherein the connection plate may protrude in a direction perpendicular to the connection protrusion.

The door bridge may include a groove into which the connection protrusion having passed through the second guide hole is inserted.

The shroud may further include a support part configured to support the other end of the door in response to the steering device being positioned at the normal position.

The door device may be provided at each of two opposite left and right sides of the shroud.

In another general aspect of the disclosure, a cockpit for a vehicle, includes: a steering device including a shroud configured to substantially cover a steering column, and a multifunctional lever protruding and extending outward from the shroud; a frame connected to the steering device to enable the steering device to perform a telescopic operation; a dashboard having an opening through which at least a portion of the steering device passes; a door device configured to selectively block a space between an edge of the opening and the shroud; a sensor for sensing a position of the steering device; and a controller configured to, in response to the steering device being positioned at a normal position, control the door device to block the space, and in response to the steering device moving to an accommodation position toward the dashboard, control the door device to open the space and prevent interference with the multifunctional lever.

The door device may include a rail box fixed to the frame and having a first guide hole and a second guide hole, a door with one end rotatably connected to the rail box, a door link configured to rotate the door while moving along the first guide hole, a door bridge configured to move the door link while moving along the second guide hole, and an actuator for applying force to move the door bridge, wherein the controller may be further configured to control the actuator based on the position of the steering device.

The door device may be provided at each of two opposite left and right sides of the shroud.

### BRIEF DESCRIPTION OF THE DRAWINGS

FIG. 1 is a perspective view illustrating a cockpit according to an embodiment of the present invention.
FIG. 2 is a top plan view illustrating a steering unit and a dashboard in the cockpit in FIG. 1.
FIG. 3 is a view illustrating a state in which a shroud of the steering unit and a door unit are installed on a frame.
FIG. 4 is a view illustrating the shroud.
FIG. 5 is a view illustrating a configuration of the door unit.
FIG. 6 is a view illustrating a door bridge disposed in a rail box of the door unit.
FIGS. 7 to 10 are views illustrating an operation of the door unit in accordance with a telescopic operation of the steering unit.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

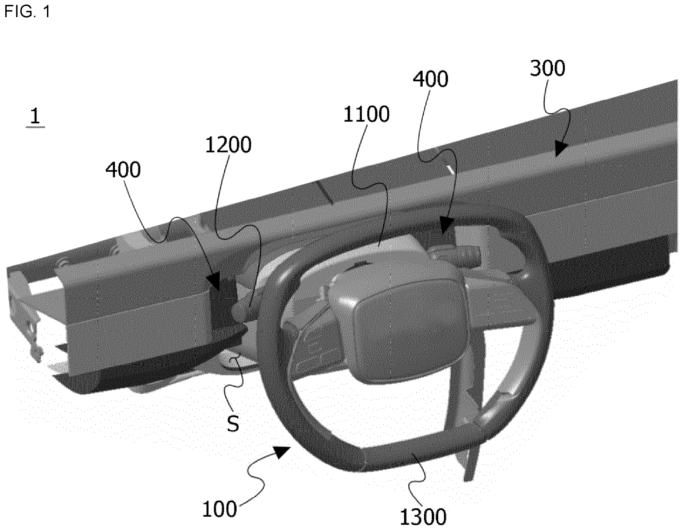

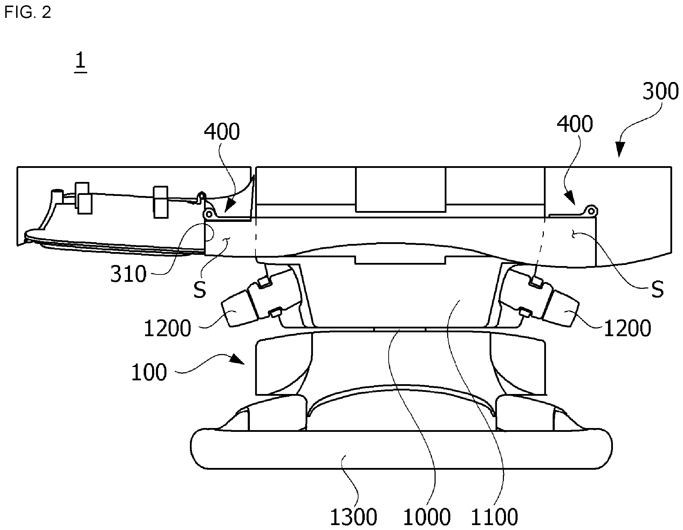

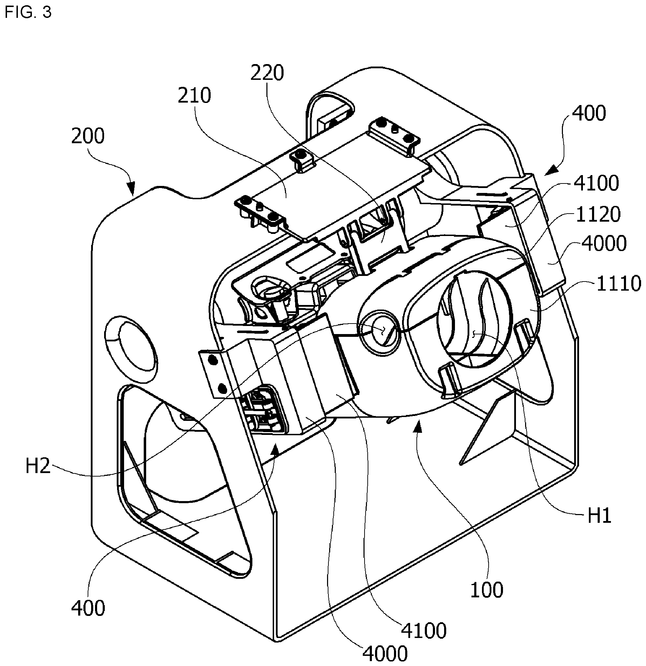

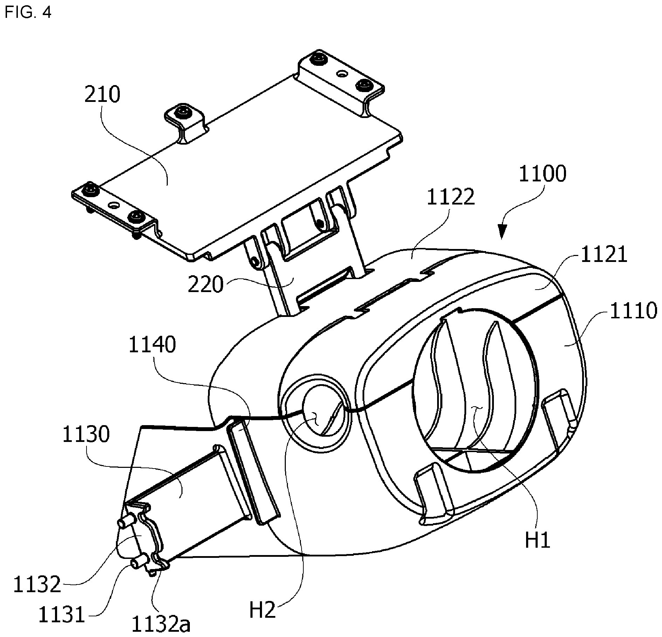

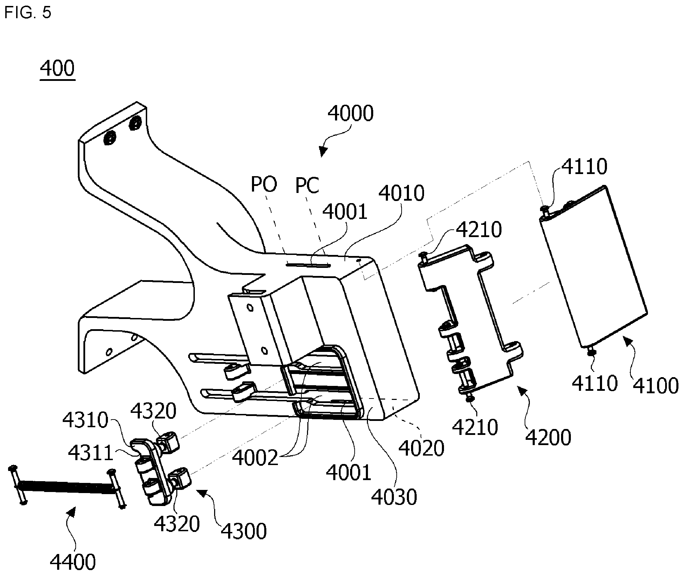

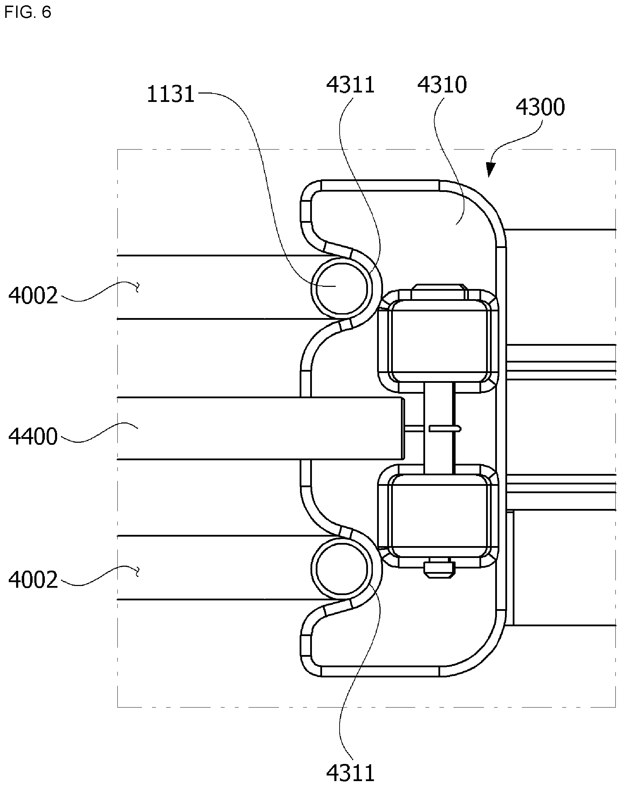

FIGS. 1 to 6 illustrate a cockpit for a vehicle according to an embodiment of the present invention and configurations.

With reference to the drawings, a cockpit 1 for a vehicle according to the embodiment of the present invention may include a steering unit 100, a frame 200, a dashboard 300, and door units 400.

The steering unit 100 may include a shroud 1100 configured to cover a steering column 1000, and multifunctional levers 1200 protruding and extending outward from the shroud 1100. A steering wheel 1300 may be connected to the steering column 1000.

The steering unit 100 allows a driver to manipulate the vehicle at a normal position P1. In an autonomous driving mode, the steering unit 100 may move to an accommodation position P2 to ensure the interior space. That is, the steering unit 100 is extended or contracted between the normal position P1 and the accommodation position P2 by a telescopic operation, and the steering wheel 1300 is hidden at the accommodation position P2, such that the interior space may be ensured, and the openness may be improved. The telescopic operation may include a tele-in operation of moving the steering wheel 1300 toward an engine room by moving the shroud 1100, together with the steering column 1000, in a forward/rearward direction of the vehicle, and a tele-out operation of moving the steering wheel 1300 toward a driver.

The shroud 1100 may include a lower part 1110 and an upper part 1120 coupled to each other, and the upper part 1120 may include a first upper part 1121 and a second upper part 1122. The first upper part 1121 may be coupled to the lower part 1110 and define, together with the lower part 1110, a column hole H1 and lever holes H2 through which the steering column 1000 and the multifunctional levers 1200 pass, respectively. The second upper part 1122 may be rotatably connected to the first upper part 1121.

The shroud 1100 may include a connection part 1130 connected to a door bridge 4300 of the door unit 400. In addition, the shroud 1100 may include a support part 1140 configured to support a door 4100 of the door unit 400 when the steering unit 100 is positioned at the normal position P1. The connection part 1130 and the support part 1140 may be structured to protrude outward from the lower part 1110. In addition, a sensor may sense the position of the steering unit 100 (e.g., position P1 or position P2), and a controller (e.g., a processor such as an ECU (Electronic Control Unit) may control an actuator to move the door 4100 based on the position of the steering unit 100.

The frame 200 may support the steering unit 100 and the door units 400.

The steering unit 100 may be connected to the frame 200 so that the steering unit 100 may perform the telescopic operation. Specifically, in a state in which one side of the second upper part 1122 of the shroud 1100 is rotatably connected to the first upper part 1121, the other side of the second upper part 1122 may be rotatably connected, by means of a connection link 220, to a hinge plate 210 fixed to the frame 200.

The frame 200 may be disposed in a space between the dashboard 300 and the engine room and may not be exposed to the inside of the occupant compartment.

An opening 310 may be formed in the dashboard 300, and the steering unit 100 may pass through the opening 310. The shroud 1100 of the steering unit 100 may be disposed as a structure passing through the opening 310.

Spaces S may be provided to correspond to an interval between an edge of the opening 310 and the shroud 1100. The space S may be formed to have a size to a degree to which the multifunctional lever 1200 protruding from the shroud 1100 passes through the opening 310 and does not interfere with the dashboard 300 when the steering unit 100 performs the telescopic operation. That is, the spaces S may be provided at two opposite left and right sides of the shroud 1100 in which the multifunctional levers 1200 are provided. The space S may have a size larger than a protruding length of the multifunctional lever 1200 protruding from the shroud 1100.

The door unit 400 may be configured to selectively block the space S between an edge of the opening 310 and the shroud 1100. That is, because the inside of the dashboard 300 is exposed through the spaces S, there is a likelihood that the design quality deteriorates, and external foreign substances are easily introduced and damage the vehicle.

The door unit 400 blocks the space S when the steering unit 100 is positioned at the normal position P1. When the steering unit 100 moves to the accommodation position P2 toward the dashboard 300, the door unit 400 opens the space S to prevent interference with the multifunctional lever 1200.

The door unit 400 may include a rail box 4000, the door 4100, a door link 4200, the door bridge 4300, and an elastic member 4400.

The rail box 4000 may be fixed to the frame 200 and have first guide holes 4001 and second guide holes 4002. Specifically, the rail box 4000 may include an upper surface 4010 and a lower surface 4020 disposed horizontally, and a lateral surface 4030 disposed vertically and configured to connect the upper surface 4010 and the lower surface 4020.

The first guide holes 4001 may be formed in the upper surface 4010 and the lower surface 4020, and the second guide holes 4002 may be formed in the lateral surface 4030. The first guide holes 4001 and the second guide holes 4002 may be formed in a straight slit shape elongated in a forward/rearward direction of the vehicle that is a movement direction of the shroud 1100. The second guide holes 4002 may be provided as a plurality of second guide holes 4002. In the embodiment, an example is described in which the second guide holes 4002 are provided as a pair of second guide holes 4002. However, the present invention is not limited thereto.

One end of the door 4100 may be rotatably connected to the rail box 4000. In the embodiment, the door 4100 may have an approximately rectangular shape. Rotary shafts 4110 may be provided at one end of the door 4100 and respectively connected to the upper surface 4010 and the lower surface 4020 of the rail box 4000. The other end of the door may be supported on the support part 1140 provided on the shroud 1100 in the state in which the steering unit 100 is positioned at the normal position P1.

The door 4100 may be opened or closed while being rotated by operations of the door link 4200 and the door bridge 4300.

The door link 4200 may be disposed between the upper surface 4010 and the lower surface 4020 and rotate the door 4100 while sliding along the first guide hole 4001.

Guide protrusions 4210 may be provided at one side of the door link 4200 and respectively connected to the first guide hole 4001 of the upper surface 4010 and the first guide hole 4001 of the lower surface 4020. Therefore, the door link may move between an open position PO and a closed position PC along the first guide holes 4001 by means of the guide protrusions 4210 and rotate about the guide protrusions 4210. In this case, the closed position PC may correspond to an end of the first guide hole 4001 based on the direction of the dashboard 300, and the open position PO may correspond to the opposite end.

In addition, the other side of the door link 4200 may be rotatably connected to the door 4100. Specifically, the other side of the door link 4200 may be hingedly connected to an approximate center of the door 4100.

The door 4100 may be kept in the closed state when the door link 4200 is positioned at the closed position PC. When the door link 4200 moves to the open position PO, the door 4100 may switch to the open state while rotating.

The door bridge 4300 may move the door link 4200 while sliding along the second guide hole 4002.

The door bridge 4300 may be disposed while penetrating the second guide hole 4002. Further, one side of the door bridge 4300 may be rotatably connected to one side of the door link 4200 inside the lateral surface 4030, and the other side of the door bridge 4300 may be connected to the elastic member 4400 outside the lateral surface 4030.

The door bridge 4300 may include a base 4310 disposed outside the lateral surface 4030, and connection pins 4320 extending from the base 4310 toward the inside of the lateral surface 4030 while penetrating the second guide holes 4002. The connection pins 4320 may be provided as a plurality of connection pins 4320 while corresponding to the second guide holes 4002. The elastic member 4400 may be connected to the base 4310, and the ends of the connection pins 4320 may be hingedly connected to the door link 4200.

The door bridge 4300 may slide along the second guide hole 4002 by means of the connection pins 4320. Therefore, the door link 4200 connected to the connection pins 4320 may also move between the open position PO and the closed position PC along the first guide hole 4001.

The elastic member 4400 may apply an elastic force to move the door bridge 4300.

One side of the elastic member 4400 may be connected to the base 4310 of the door bridge 4300, and the other side of the elastic member 4400 may be connected to the lateral surface 4030 of the rail box 4000. In the embodiment, a coil spring may be used as the elastic member 4400. However, the present invention is not limited thereto.

The elastic member 4400 may be kept extended when the door bridge 4300 and the door link 4200 are positioned at the closed position PC. The elastic member 4400 may be kept released at the open position PO. That is, when the door bridge 4300 moves from the open position PO to the closed position PC in conjunction with the door link 4200, the elastic member 4400 may be extended and generate an elastic force F. When the door bridge 4300 moves back to the open position PO, the elastic member 4400 may be restored.

The door bridge 4300 may be connected to the connection part 1130 provided on the shroud 1100.

Specifically, the connection part 1130 may extend from the shroud 1100 toward the lateral surface 4030 of the rail box 4000 and be connected to the door bridge 4300. A connection plate 1132 may be provided at an end of the connection part 1130 and have connection protrusions 1131 connected to the second guide holes 4002, and connection grooves 1132a connected to the door bridge 4300.

The connection protrusion 1131 may protrude from the end in the extension direction of the connection part 1130. The connection plate 1132 may protrude in a direction perpendicular to the connection protrusion 1131 toward the dashboard 300.

The door bridge 4300 may have grooves 4311 provided in the base 4310 so that the connection protrusions 1131 having passed through the second guide holes 4002 are inserted into the grooves 4311. Therefore, the shroud and the door bridge may be connected to each other by the structure in which the connection protrusions 1131 of the connection part 1130 are inserted into the grooves 4311 of the base 4310 and the connection pins 4320 of the door bridge 4300 are inserted into the connection grooves 1132a of the connection plate 1132.

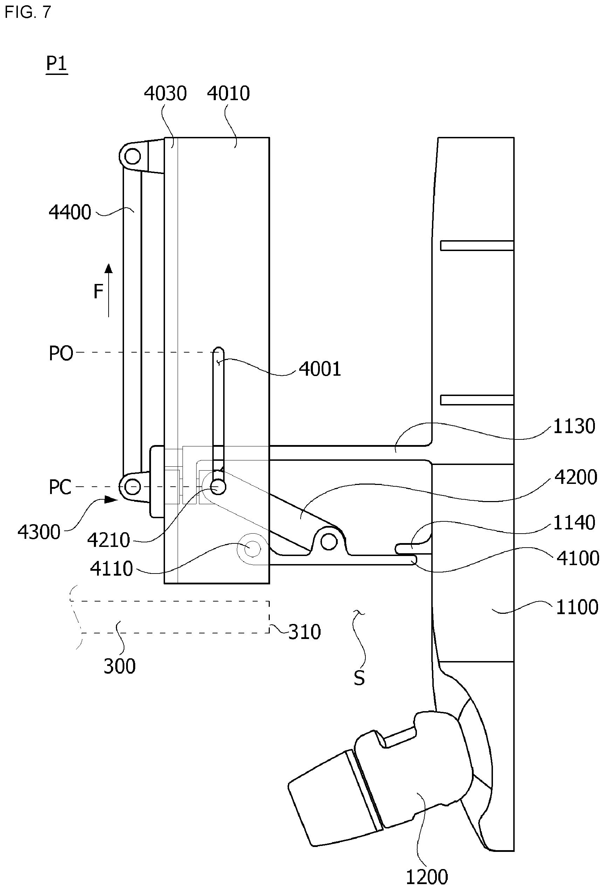

FIGS. 7 to 10 illustrate an operation of the door unit 400 according to the telescopic operation of the steering unit 100. An operation of the door unit 400 will be described with reference to FIGS. 7 to 10.

FIG. 7 illustrates a state in which the steering unit 100 is positioned at the normal position P1.

With reference to the drawings, in the state in which the steering unit 100 is positioned at the normal position P1, the door bridge 4300 is connected to the connection part 1130 in the second guide holes 4002, such that the movement thereof is restricted. The door link 4200 connected to the door bridge 4300 may be positioned at the closed position PC in the first guide holes 4001, and the other end of the door 4100 may be supported on the support part 1140, such that the door 4100 may block the space S while being kept in the closed state.

The elastic member 4400 is extended and generates the elastic force F to be applied to the door bridge 4300 in a direction opposite to a restraining force applied to the door bridge 4300 by the connection part 1130.

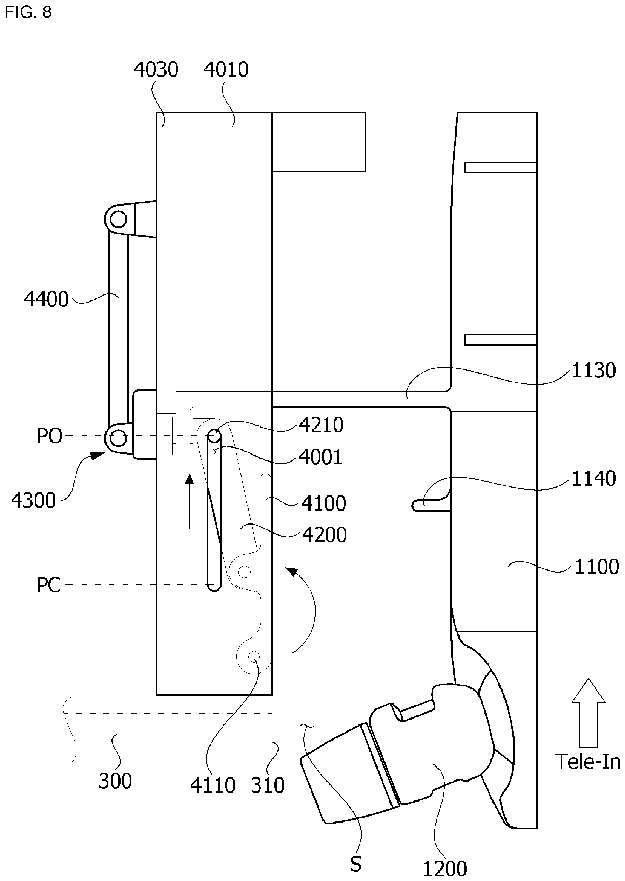

FIG. 8 illustrates a state in which the steering unit 100 moves to the accommodation position P2.

With reference to the drawings, when the steering unit 100 performs the tele-in operation and partially moves toward the engine room (e.g., 47 mm tele-in), the connection part 1130 also moves together with the shroud 1100, such that the restraining force applied to the door bridge 4300 is released. Therefore, the elastic member 4400 is restored to the original state, and the door bridge 4300 is moved along the second guide hole 4002 by the elastic force F of the elastic member 4400. Further, the door link 4200 connected to the door bridge 4300 also moves from the closed position PC to the open position PO along the first guide hole 4001, and the door 4100 switches to the open state while rotating.

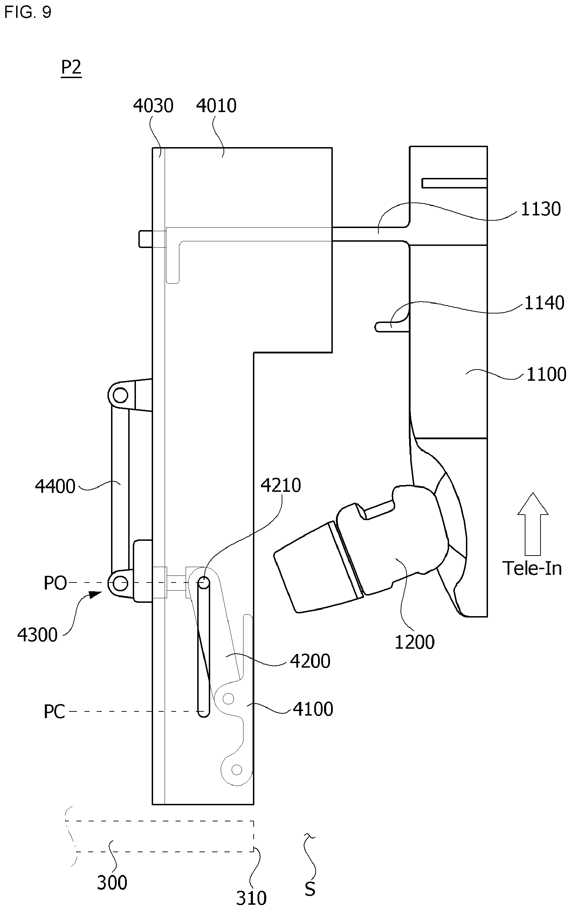

FIG. 9 illustrates a state in which the steering unit 100 is positioned at the accommodation position P2.

With reference to the drawings, in the state in which the elastic member 4400 is restored to the original state, the door bridge 4300 and the door link 4200 may be respectively provided in the second guide holes 4002 and the first guide holes 4001 in the open position PO. Further, the door 4100 opens the space S while being kept in the open state.

In the state in which the door 4100 opens the space S as described above, the steering unit 100 may perform the tele-in operation, move further toward the engine room, and be positioned in the accommodation position P2 (e.g., 150 mm tele-in), and the multifunctional lever 1200 may be accommodated in the dashboard 300 without interfering with the door 4100. Further, the opened space S is covered by the steering wheel 1300 or spokes of the steering wheel 1300, which may prevent the inside of the dashboard 300 from being exposed.

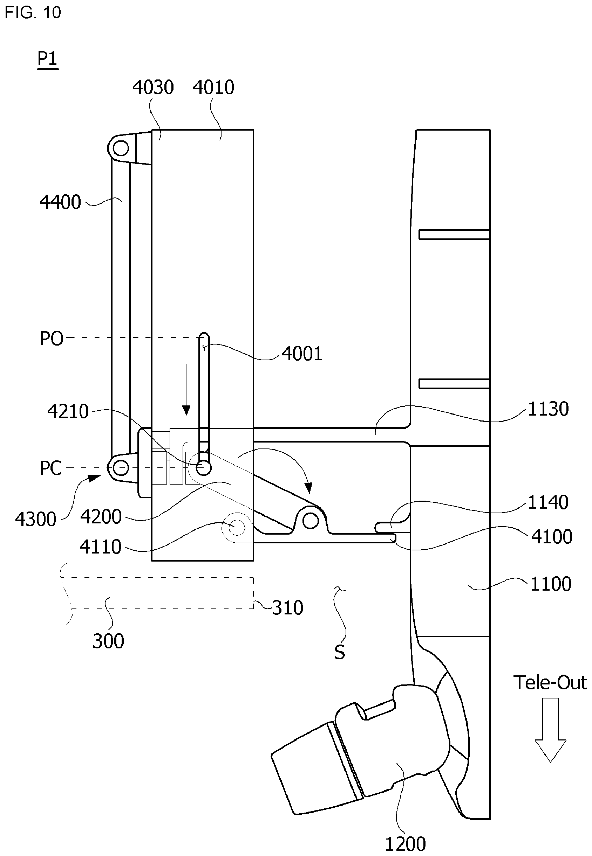

FIG. 10 illustrates a state in which the steering unit 100 moves to the normal position P1.

With reference to the drawings, when the steering unit 100 performs the tele-out operation and moves toward the inside of the occupant compartment, the connection part 1130 provided on the shroud 1100 is connected to the door bridge 4300 at the open position PO and pushes and moves the door bridge 4300 to the closed position PC. When the door bridge 4300 moves along the second guide hole 4002, the door link 4200 also moves from the open position PO to the closed position PC along the first guide hole 4001, and the elastic member 4400 is extended and generates the elastic force F. Further, the door 4100 switches to the closed state while rotating and is supported on the support part 1140 provided on the shroud 1100.

As described above, according to the embodiment of the present invention, the door 4100, which is configured to block the space S between the opening 310 of the dashboard 300 and the steering unit 100, is configured to be opened or closed in accordance with the movement of the shroud 1100, such that the multifunctional lever 1200 may move along the space S without interfering with the door 4100, which enables a stable telescopic operation of the steering unit 100.

Therefore, the overall structure and configuration may be simplified in comparison with the structure in the related art in which the multifunctional lever and the steering wheel are folded to prevent interference with the dashboard.

The embodiment of the present invention may provide the cockpit for a vehicle, the cockpit being capable of telescopically operating the steering unit by implementing the method of avoiding the components.

The effects of the present invention are not limited to the aforementioned effects, and other effects, which are not mentioned above, will be clearly understood by those skilled in the art from the claims.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A cockpit for a vehicle, the cockpit comprising:
a steering device comprising:
a shroud configured to cover a steering column; and
a multifunctional lever protruding and extending outward from the shroud;
a frame to which the steering device is connected to perform a telescopic operation;
a dashboard having an opening through which the steering device passes; and
a door device configured to selectively block a space between an edge of the opening and the shroud,
wherein, in response to the steering device being positioned at a normal position, the door device is configured to block the space, and
wherein, in response to the steering device moving to an accommodation position toward the dashboard, the door device is further configured to open the space and prevent interference with the multifunctional lever.

2. The cockpit of claim 1, wherein the door device comprises:
a rail box fixed to the frame and having a first guide hole and a second guide hole;
a door with one end rotatably connected to the rail box;
a door link configured to rotate the door while moving along the first guide hole;
a door bridge configured to move the door link while moving along the second guide hole; and
an elastic member configured to apply an elastic force to move the door bridge.

3. The cockpit of claim 2, wherein the rail box comprises:
an upper surface and a lower surface provided to face each other; and
a lateral surface configured to connect the upper surface and the lower surface, and
wherein the first guide hole is formed in each of the upper surface and the lower surface, and the second guide hole is formed in the lateral surface.

4. The cockpit of claim 3, further comprising guide protrusions provided at one side of the door link and connected to the first guide hole of the upper surface and the first guide hole of the lower surface,
wherein another side of the door link is rotatably connected to the door.

5. The cockpit of claim 3 or 4, wherein the door bridge is disposed to penetrate the second guide hole,
wherein one side of the door bridge is rotatably connected to one side of the door link inside the lateral surface, and
wherein the other side of the door bridge is connected to the elastic member outside the lateral surface.

6. The cockpit of any one of claims 2 to 5, wherein the shroud comprises a connection part extending toward the rail box and connected to the door bridge, and
wherein the connection part is configured to move the door bridge in response to the steering device moving from the accommodation position to the normal position.

7. The cockpit of claim 6, further comprising:
a connection plate having a connection groove connected to the door bridge; and
a connection protrusion connected to the second guide hole,
wherein the connection plate and the connection protrusion are provided at an end of the connection part,
wherein the connection protrusion protrudes from the end in an extension direction of the connection part, and
wherein the connection plate protrudes in a direction perpendicular to the connection protrusion.

8. The cockpit of claim 7, wherein the door bridge includes a groove into which the connection protrusion having passed through the second guide hole is inserted.

9. The cockpit of any one of claims 6 to 8, wherein the shroud further comprises a support part configured to support the other end of the door in response to the steering device being positioned at the normal position.

10. The cockpit of any one of claims 1 to 9, wherein the door device is provided at each of two opposite left and right sides of the shroud.

11. The cockpit of any one of claims 1 to 10, further comprising:
a sensor for sensing a position of the steering device; and
a controller configured to:
in response to the steering device being positioned at a normal position, control the door device to block the space, and
in response to the steering device moving to an accommodation position toward the dashboard, control the door device to open the space and prevent interference with the multifunctional lever.

12. The cockpit of claim 11, wherein the door device comprises:
a rail box fixed to the frame and having a first guide hole and a second guide hole;
a door with one end rotatably connected to the rail box;
a door link configured to rotate the door while moving along the first guide hole;
a door bridge configured to move the door link while moving along the second guide hole; and
an actuator for applying force to move the door bridge,
wherein the controller is further configured to control the actuator based on the position of the steering device.

13. The cockpit of claim 11, wherein the door device is provided at each of two opposite left and right sides of the shroud.
